# EUROPÄISCHE PATENTSCHRIFT

(11) **EP 1 811 628 B1**
(45) Veröffentlichungstag und Bekanntmachung des Hinweises auf die Patenterteilung: **03.03.2010**
(21) Anmeldenummer: 06013721.3
(22) Anmeldetag: 03.07.2006
(51) Int. Cl.: H02J 3/14

(54) **Verfahren zur Lastführung für thermische Verbraucher oder für Generatoren**
Method for regulation of power distributed to thermal loads or of power generated by generators
Méthode pour régler la distribution d'énergie aux consommateurs thermiques ou la production d'énergie par des générateurs

(43) Veröffentlichungstag der Anmeldung: 25.07.2007
(73) Patentinhaber: Landis+Gyr AG, 6300 Zug (CH)
(72) Erfinder: Scheidegger, Jürg, 8047 Zürich (CH)
(74) Vertreter: Rentsch & Partner

(56) Entgegenhaltungen:
- US-A- 4 819 180
- US-A- 5 696 695
- US-A- 5 956 462

## Beschreibung

Die vorliegende Erfindung betrifft ein Verfahren zur Lastführung für Verbraucher nach dem Oberbegriff des Patentanspruches 1.

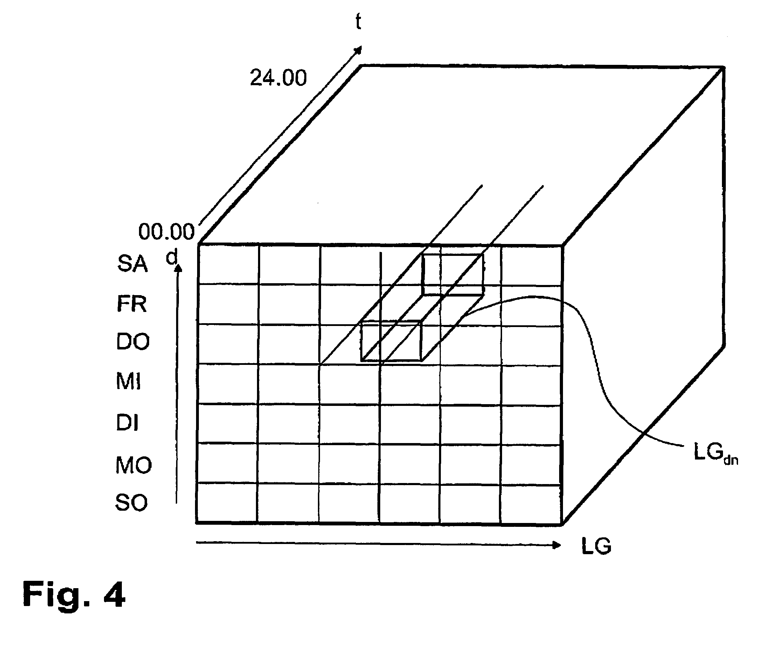

Speicherheizungen werden in Abhängigkeit der Aussentemperatur mit Nachtstrom geladen. Die Lastführung der Rundsteuerung bestimmt die Ladezeiten automatisch und verhindert eine Überlast im Energieversorgungsnetz. Dabei werden vom Energieversorgungsunternehmen EVU die Ladezeiten manuell berechnet und für die Rundsteuerung entsprechend fix parametriert. Ein Beispiel einer solchen fixen Ladezeiten LG_{dn} ist der Figur 4 zu entnehmen: Die Ladezeiten sind über die Wochentage d und pro Wochentage über die Stunden t für eine bestimmte Lastgrüppe LG mit einem Index n festgelegt. In Figur 4 ist lediglich ein Beispiel mit LG_{dn} angegeben. Selbstverständlich kann die Aufladung einer Lastgruppe auch intermittierend pro Tag erfolgen. Unter dem Begriff Lastgruppe werden alle Verbraucher zusammengefasst, die mit einem Rundsteuerbefehl ein- oder ausgeschaltet werden können. Die wichtigsten Komponenten einer Rundsteuerung sind Kommandogerät, Rundsteuersender, Übertragungsnetz (=Stromnetz) und Rundsteüerempfänger beim Verbraucher. Diese Komponenten sind im Stand der Technik allgemein bekannt und im Folgenden wird zur Vereinfachung einfach davon gesprochen, dass über den Rundsteuersender Kommandi an die (thermischen) Verbraucher gesandt werden, damit diese entsprechenden mit Energie versorgt werden können. Als Fundstelle für solche Rundsteuerungen und Rundsteuersender werden hier die Schriften EP 0 729 213 B1 und EP 0 738 033 B1 angegeben.

Diese fixe Parametrierung beruht auf einer statistischen Auswertung über beispielsweise das letzte Halbjahr oder das letzte Quartal der gemessenen Lasten. Die Perioden sind beispielsweise:
1. Periode September bis November,
2. Periode Dezember bis Februar,
3. Periode März bis Mai,
4. Periode Juni bis August.

Diese starre Festlegung ist mit betrieblichen Nachteilen behaftet.

Derzeit bekannte Systeme sind nicht in der Lage, anstelle der fixen Parametrierung eine dynamische Parametrierung vorzunehmen und insbesondere auf die aktuellen Temperaturen abgestimmt die Aufladung vorzunehmen.

In US 4,819,180 (Ass. Dencor Energy Cost Controls, Inc., Denver, Colorado; granted April 4, 1989) ist ein Verfahren und ein System zur lastabhängigen Energieverteilung beschrieben. Die Verbraucher sind an eine nicht dezentral angeordnete Lastmesseinrichtung angeschlossen. Die Laststeuerung erfolgt dezentral bei allen Verbrauchern gleichzeitig und in gleicher Art durch eine drahtlose Übermittlung eines Signals an die Verbraucher.

Der vorliegenden Erfindung liegt daher die Aufgabe zugrunde, ein Verfahren zur Lastführung für Verbraucher eines Energieversorgungsnetzes für verschiedene Lastgruppen wie Speicherheizungen oder Boiler anzugeben, das die vorstehend genannten Unzulänglichkeiten eliminiert, automatisiert abläuft und dabei die früheren manuellen Eingriffe nicht mehr erfordert.

Diese Aufgabe für den Verbraucher wird durch die im Patentanspruch 1 angegebenen Massnahmen gelöst.

Die vorliegende Erfindung ermöglicht, die einer Ladegruppe zugeordneten Verbraucher ortsabhängig von einer Messgrösse mit Energie zu versorgen. Darüber hinaus ist dank der quasi vor Ort erfassten Messwerte ein dynamisches und automatisiert ablaufendes Verfahren geschaffen.

Vorteilhafte Ausgestaltungen der Erfindung sind in weiteren Ansprüchen angegeben. So ist beispielsweise durch die Zuordnung von zwei Temperaturfühlern pro Unterstation die Verfügbarkeit des erfindungsgemässen Verfahrens signifikant erhöht. Dabei erfassen diese zwei Temperaturfühler die Werte unabhängig voneinander und werden als separate Werte der Unterstation zugeführt.

Für den Fall der Zuschaltung von Generatoren können die Sensoren so ausgebildet sein, dass sie exakt die die EnergieErzeugung beeinflussende externe Faktoren erfassen wie beispielsweise Wind/Windrichtung oder Lichteinfall.

Die Erfindung wird nachfolgend anhand der Zeichnung beispielsweise näher erläutert. Dabei zeigen:
- Figur 1: Struktur der Software in einer in Figur 1 gezeigten Unterstation ;
- Figur 2: an einer Unterstation angeschlossene periphere Komponenten;
- Figur 3: Beispiel des Lastverlaufes unter Angabe der Ladezeiten für eine Lastgruppe;
- Figur 4: Darstellung der Lastführung gemäss dem Stand der Technik ;

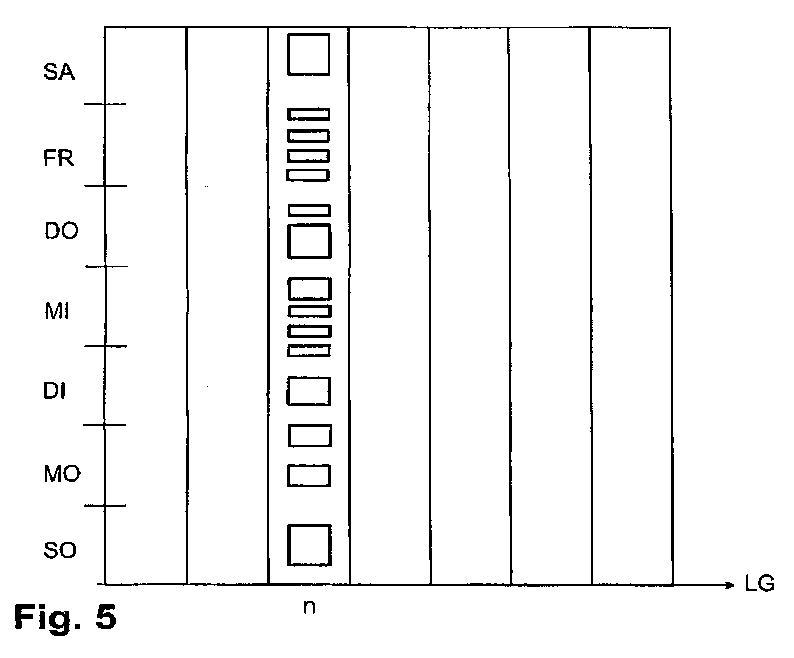

- Figur 5: Darstellung der Lastführung gemäss einem bevorzugten Ausführungsbeispiel gemäss der vorliegenden Erfindung.

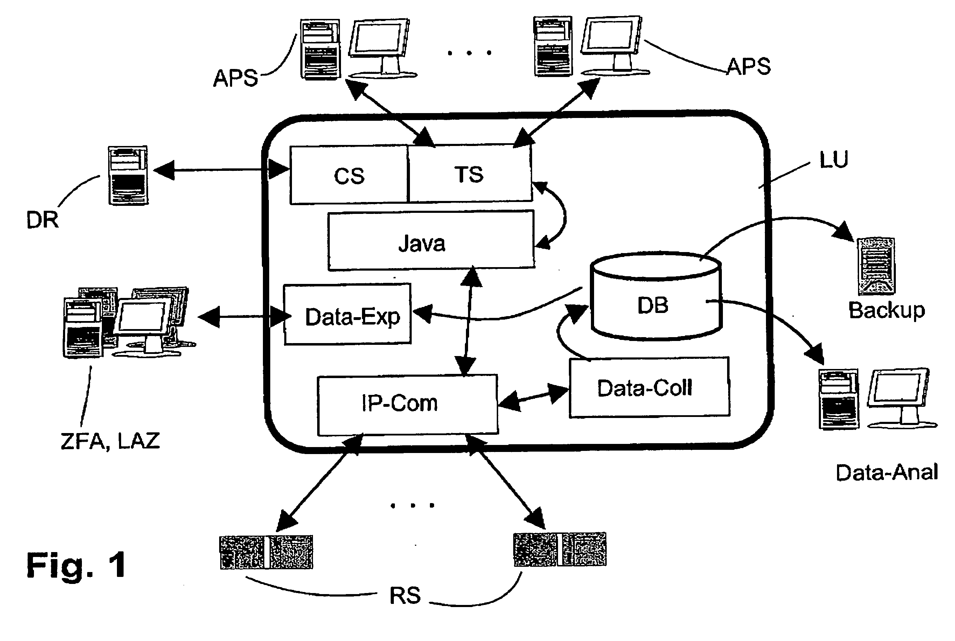

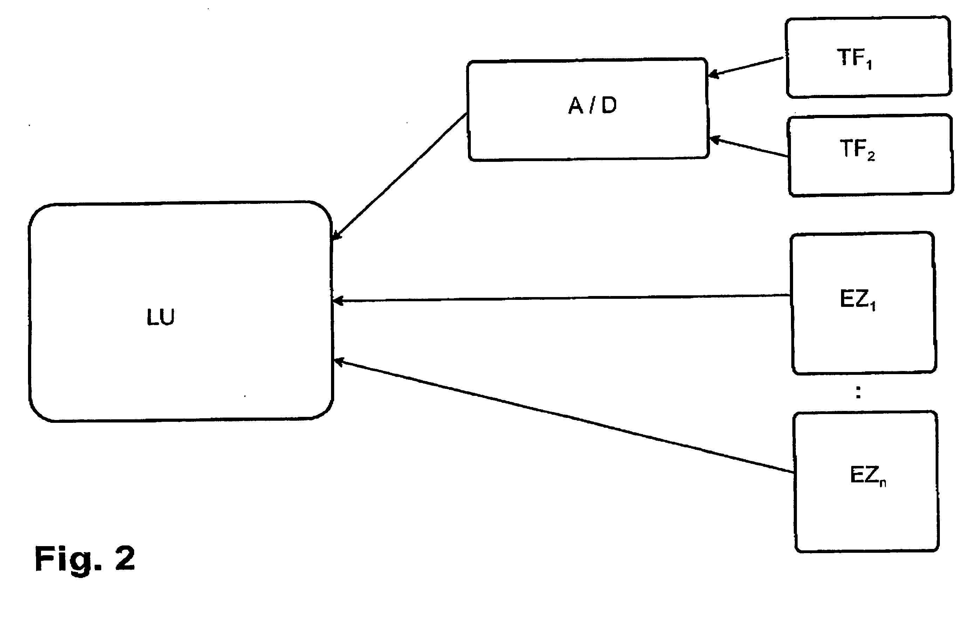

Die grundlegenden Einheiten für die Durchführung einer bevorzugten Ausführungsform der vorliegenden Erfindung werden gemäss der Figuren 1 und 2 erläutert, nämlich:
- eine Mehrzahl von Unterstationen LU, die ihrerseits mit wenigstens einem Rundsteuersender RS verbunden sind.

Zunächst wird das Ausführungsbeispiel auf den Fall von thermischen Verbrauchern bezogen. Die Unterstationen LU sind üblicherweise mit zwei Temperaturfühlern TF₁, TF₂ über einen Analog/Digital-wander A/D verbunden, siehe dazu die Figur 2. Dabei ist zu beachten, dass die Unterstationen LU geographisch verteilt sind und die Temperatur in ihrem Versorg-ungsgebiet messen. Die Unterstationen LU sind mit mehreren Energieverbrauchszählern EZ₁, .. Ezₙ, verbunden, die in einem festen Zeitraster, z.B. alle 15min abgelesen werden, siehe dazu ebenso Fig. 2.

Die von den Unterstationen LU erfassten Temperaturwerte und Energieverbrauchswerte weisen die beispielhaft in der Tabelle 1 gezeigte Struktur auf.

**Tabelle 1: Von einer Unterstation LU erfasste Daten.**

| Stationsname | Datum | Zeit | Temperatur °C | Energie Zähler 1 (KWh) | Energie Zähler 2 (KWh) |
|---|---|---|---|---|---|
| Belp | 19.06.2006 | 00.00 | 3 | 100 | 200 |
| Belp | 19.06.2006 | 00.15 | 3 | 100 | 200 |
| . | . | . | . | . | . |
| Belp | 19.06.2006 | 23:45 | 3 | 100 | 300 |

Die thermischen Verbraucher sind einer Lastgruppe zugeordnet. Eine Lastgruppe, das sind Verbraucher, die mit einem Rundsteuerbefehl ein- oder ausgeschaltet werden können, kann dabei definiert sein über die jeweilige Ladeleistung. Handelt es sich bei den Verbrauchern um Speicherheizungen, wird dabei der Begriff Ladegruppe als Menge einer Lastgruppe verwendet. Für Ladegruppen ist die Lastführung abhängig von der Tagesmitteltemperatur des Vortags zu steuern. Diese Steuerung hat drei Komponenten:
1. Tagesgesamtladezeit jeder Ladegruppe steuern.
2. Ladeleistung einer Ladegruppe auf einen von z.B. vier vordefinierten Stellwerten setzen, wie 100%, 80%, 60%, 40%.
3. Ergänzungsenergie freigeben bez. sperren.

Die in den Unterstationen LU realisierten Funktionen sind folgende:

### a) Werksteuerungsfunktionen

Die werksteuerung ist eine Lastführung der Elektroheizungen mit, aus langjähriger Erfahrungswerten ausgeklügelten statischen Schaltblöcken. Ergänzende Stellwerte, abgeleitet aus der mittleren Tagesaussentemperatur, steuern die Ladeleistung. Dazu kommt eine völlige Abschaltung der Heizung im Sommer. Die elektrischen Speicher-Zentralheizungen verfügen über vier Thermostatstufen (40%, 60%, 80% und 100%). Dies sind grobe Stufen. Mit einer bevorzugten Ausführungsform der vorliegenden Erfindung wird die Werksteuerung abgelöst durch eine dynamische Lastführung. Die Schaltblöcke in der bisherigen Form werden nicht mehr gebraucht. Die dynamische Lastführung optimiert den Lastverlauf in Bezug auf einen vorgegebenen Soll-Maximumwert (Vorgabewert). Um den momentanen Lastverlauf zu erfassen und die ¼h Optimierung zu errechnen, wird ein Zählimpuls (= momentane Energielieferung) des zu steuernden Gebietes benötigt, entweder als Summenimpuls oder als Zählimpuls von Teilgebieten, die dann intern summiert werden.

### b) Parameter

Die Parameter der Werksteuerungsfunktion werden pro lokale Steuerung verwaltet. Dazu werden verschiedene Ladegruppen definiert, z.B. deren 20.

Wochentage und Sondertage (Feiertage) werden pro Zeitprogramm definiert.

Mit einem separaten Prozess - siehe die Angaben oben - wird die mittlere Tagesaussentemperatur erfasst und damit der Stellwert für die Ladungsschwelle, sowie auch ein Sperrkommando generiert.

Die Vorgabewerte werden pro Unterstationengebiet festgelegt. Anstelle von Unterstationengebiet wird in einer anderen Sicht auch von Teilgebiet eines Versorgungsgebietes gesprochen, wobei jedem Teilgebiet eine Unterstation LU zugeordnet ist. Die Lastführung regelt den Energieabsatz auf eine Soll-Last im Netz. Diese wird als Tagesprofil eingegeben. Für jede Lastgruppe bzw. Ladegruppe wird in einem Parametersatz festgelegt, wann und wie sie der Lastführung zur Verfügung steht.

Die mittlere Temperatur des Vortages ist in eine Mehrzahl von Temperaturbereichen, z.B. 14, eingeteilt, Für jeden der definierten Temperaturbereiche ist ein Parametersatz pro Ladegruppe definiert. Je nach Temperaturbereich wird der entsprechende Parametersatz aller Ladegruppen aktiviert. Zudem werden je nach Temperatur die Stellwerte für die Thermostatstufen gesendet.

In den Parametersätzen sind pro Ladebefehl tägliche Ladefenster vorgegeben. Darin werden Sperrzeiten, maximale und minimale Einschaltzeit etc. parametriert.

### c) Rundsteuerkommandos

Die 20 Kommandos der Lastgruppen bzw. Ladegruppen zur Steuerung der Ein- und Ausschaltzeiten der einzelnen Heizungsgrössen (Lastpaket) werden mit geeigneter Parametrierung der Lastführung überlassen:
- Minimale Ein- und Ausschaltzeit,
- gesamte Einschaltzeit in der Lade-Periode wie oben beschrieben.

Ferner sind 2 Stellwertkommandos zur Steuerung der Ladeleistung vorgesehen. Ein weiteres Sperrkommando für die Ergänzungsenergie wird über ein Teilprogramm je nach mittlerer Aussentemperatur des Vortages freigegeben und über einen zeitbefehl gesendet.

### d) Temperatur

Für die temperaturabhängige Steuerung der Speicherheizungen wird das Temperaturspektrum in 12 Bereiche aufgeteilt. Zwei weitere Bereiche bedeuten: «Heizung ganz aus» und «Heizung maximum» (entspricht in der Funktion dem Bereich -12.5° bis -15°). Dies ergibt die vorgenannten total 14 Bereiche.

**Tabelle 2 : Beispielhafte Gliederung der Temperaturbereiche.**

| Bereich | Temp. min. | Temp. max. | Stufe | Ergänzungs energie |
|---|---|---|---|---|
| 1 | | -12.5 °C | 100% | Frei |
| 2 | -12.5 °C | -9.9°C | 100% | Frei |
| 3 | -9.9°C | -7.2°C | 100% | Frei |
| 4 | -7.2°C | -4.8°C | 80% | Frei |
| 5 | -4.8°C | -2.1°C | 80% | Frei |
| 6 | -2.1°C | 0.5°C | 80% | Frei |
| 7 | 0.5°C | 3.0°C | 60% | Frei |
| 8 | 3.0°C | 5.8°C | 60% | Frei |
| 9 | 5.8°C | 8.2°C | 60% | Frei |
| 10 | 8.2°C | 10.8°C | 40% | Frei |
| 11 | 10.8°C | 13.4°C | 40% | Frei |
| 12 | 13.4°C | 16°C | 40% | Frei |
| 13 | 16°C | 23°C | | Frei |
| 14 | 23°C | | | Gesperrt |

Je nach Temperatur gilt für die Lastführung eine andere Ladezeit der Ladegruppen, das heisst hier der Heizungen. Die Temperatur wird somit den Parameter für die gesamte Einschaltzeit der Ladegruppen beeinflussen. So wird z. B. die Ladegruppe 15h nur für insgesamt 4h freigegeben. Damit kann die Energiemenge noch feiner dosiert werden, als die 4 Stufen durch Stellwert 1 und 2 gestatten. Aus der Tabelle 2 ist ersichtlich, dass bei gewissen Grenzen der Parametersatz der Lastführung wechselt. Bei anderen Grenzen werden Rundsteuerbefehle ausgelöst.

### e) Schaltblock

Die Schaltblöcke enthalten die Ein- und Ausschaltzeiten jedes Lastpaketes über einen Tag. Im Schaltblock ist auch der Stellwert (=Aufladeleistung) des Lastpaketes definiert. Der Stellwert definiert die Aufladeleistung für die werkgesteuerten Heizungen in Abhängigkeit der Temperatur.

**Tabelle 3: Gliederung der Schaltblöcke und Zuordnung zur Ladeleistung.**

| Schaltblöcke | Stellwert | | Ladeleistung |
|---|---|---|---|
| | 1 | 2 | |
| 1 - 3 | 1 | 1 | 100% |
| 4 - 6 | 0 | 1 | 80% |
| 7 - 9 | 1 | 0 | 60% |
| 10 - 12 | 0 | 0 | 40% |

Die Stellwerte werden wie das Sperrkommando über ein Teilprogramm freigegeben durch den Temperaturmittelwert des Vortages. Ausgelöst werden sie über einen Zeitbefehl.

### e) Schaltzeiten

Pro Lastpaket und Temperaturbereich (Schaltblock) wird eine maximale Ladezeit definiert. Diese Ladezeit wird in der Lastführung eingegeben. Pro Temperaturbereich wird ein Parametersatz definiert, der bei entsprechender Temperatur freigegeben und von der Lastführung verwendet wird. Die Parametersätze der anderen Temperaturbereiche sind jeweils gesperrt. Dies kann beispielhaft wie folgt festgelegt sein: Die kürzeste Einschaltzeit darf nicht kleiner als 30 Min. sein. Pro Tag sollten nicht mehr als 6 Schaltzeiten (Freigabe der Aufladung) möglich sein, davon 3 vor Mittag und 3 nach Mittag. Diese Festlegung richtet sich nach den Erfordernissen des jeweiligen Energieverteilungsunternehmens.

### f) Lastpaket

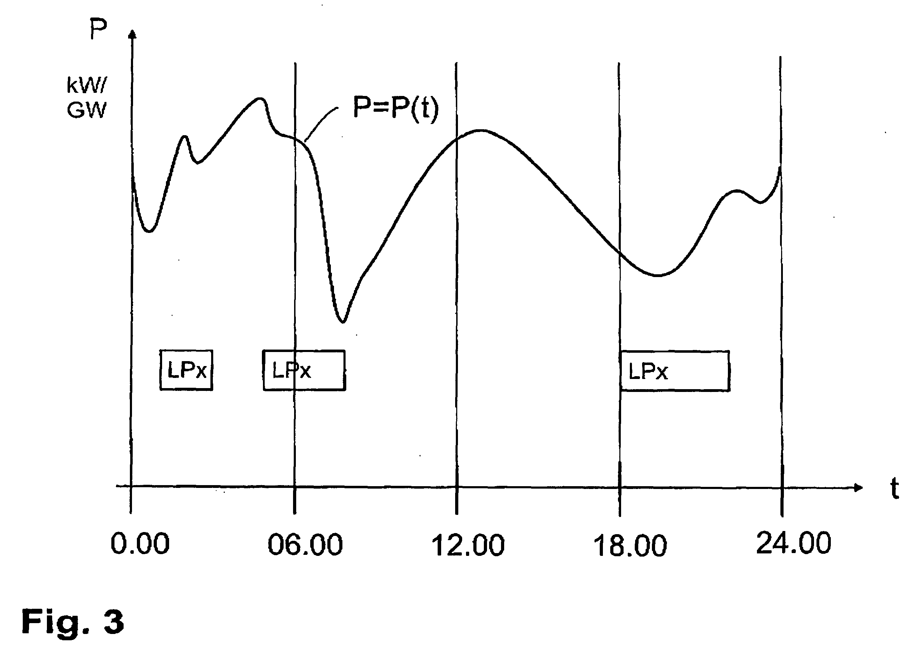

Die Höhe der Lastpakete entspricht der maximalen Leistung der werkgesteuerten Heizungen dieses Lastpaketes. Die Lastführung bestimmt, mit welchen Lastpaketen LPx die Soll-Leistung optimal angenähert werden kann; ein möglicher Verlauf ist in der Figur 3 zu entnehmen. Darüber ist die Gesamtheit der über die betreffende Unterstation LU gelieferten Leistung P = P(t) über einen Tag dargestellt.

Die vorliegende Erfindung ist auf thermische Verbraucher bezogen. Das erfindungsgemässe verfahren kann auch unter Heranziehung anderer Messgrössen als der Temperatur auch für andere Verbrauchertypen angewendet werden.

Das vorstehend erläuterte Ausführungsbeispiel lässt sich «mutatis mutandis» auf den Fall übertragen, wo anstelle von an einem Teilnetz angeschlossenen thermischen Verbraucher Generatoren vorhanden sind. Der vorstehend eingeführte Begriff «Teilnetz» ist dabei synonym mit dem eingangs eingeführten Begriff «Teilgebiet».

Dazu sind an einem Teilnetz das in aller Regel über eine kleinere geographische Region (=Teilgebiet) definiert ist eine Mehrzahl von Generatoren mittels eines Rundsteuersenders RS anschaltbar.

Beispiele von Generatoren:
- Windkraftwerk, vorzugsweise auf einem Hügelzug installiert;
- Solarkraftwerk.

An die Unterstation LU sind analog zu den Temperaturfühlern eine Mehrzahl von Sensoren angeschlossen, die die Energie-Erzeugung beeinflussenden Faktoren erfassen, also gemäss den vorgenannten Beispielen:
- Windstärke, Windrichtung;
- Helligkeit, Sonneneinstrahlung, Lichteinfall.

In der Terminologie des ersten Ausführungsbeispiels für Verbraucher sind die Generatoren Lastgruppen zugeordnet. Pro Lastgruppe ist ein oder zwei die die Energie-Erzeugung beeinflussenden Faktoren messenden Sensoren vorgesehen. Dabei die Generatoren entsprechend ihrer aktuellen Energie-Erzeugung entsprechend dem Verbrauch pro Teilnetz durch die Rundsteuersender RS zuschaltbar sind, werden folgende Verfahrensschritte durchgeführt:
i) Durch jede Unterstation LU werden mittels der Sensoren physikalische Messwerte aufgezeichnet;
ii) mittels der Energieverbrauchszähler EZ₁ .. EZₙ werden Energieverbrauchswerte in einem festen Zeitraster erfasst;
iii) für jede Lastgruppe wird abhängig vom im Verfahrensschritt i) erfassten physikalischen Messwert und abhängig von den im Verfahrensschritt ii) erfassten Energieverbrauchswerte festgelegt:
   - ein vordefinierter Stellwert im Bereich 0% bis 100% der Energie-Erzeugung der Generatoren der Lastgruppe;
   - eine Ladezeit für die Lastgruppe;
iv) der im Verfahrensschritt iii) festgelegte Stellwert und die festgelegte Ladezeit werden über den Rundsteuersender RS an die Generatoren übermittelt, um diese entsprechend an das betreffende Teilnetz zuzuschalten.

Die Sensoren sind herkömmliche Windmesseinrichtungen oder Lichtmesser, die windstärke und Windrichtung oder den Lichteinfall messen.

### Liste der verwendeten Bezugszeichen, Glossar

- A/D: Analog / Digital Wandler
- CS: Cluster Service
- Data-Anal: Datenauswertung
- Data-Coll: Datensammlung, Datenkollektion
- Data-Exp: Daten-Export
- DB: Datenbank, Data Base File Server
- DR: Doppelrechner
- EZ₁, .. Ezₙ: Energieverbrauchszähler
- IP-Com: Schnittstellen-Einheit für eine IP-Anbindung der Unterstationen LU
- Java: Bedienapplikation in JAVA
- LAZ: Langzeitarchivierung
- LP, LPx: Lastpaket
- LU: Local Unit, in der Regel einer CU untergeordnet, aber mit identischem Funktionsumfang; auch Unterstation genannt
- RS: Rundsteuersender
- TF₁, TF₂: Temperaturfühler
- TS: Terminal Server

## Patentansprüche

1. Verfahren zur Lastführung für Verbraucher in einem Versorgungsgebiet, wobei
- das Versorgungsgebiet in Teilgebiete gegliedert ist;
- jedem Teilgebiet eine Unterstation (LU) mit einem zugehörigen Rundsteuersender (RS) zugeordnet ist;
- jede Unterstation (LU) mit einem Sensor (TF₁) und wenigstens einem Energieverbrauchszähler (EZ₁) verbunden ist;
- jeder Verbraucher einer Lastgruppe einem Verbrauchertyp zugeordnet ist, wobei die Verbraucher einer Lastgruppe durch den zugehörigen Rundsteuersender (RS) zu- oder abschaltbar sind;
wobei das Verfahren die folgenden Verfahrensschritte umfasst:
i) über einen Tag werden durch jede Unterstation (LU) mittels dem Sensor (TF₁) Messwerte aufgezeichnet;
ii) mittels der Energieverbrauchszähler (EZ₁) werden Energieverbrauchswerte in einem festen Zeitraster erfasst;
iii) für jede Lastgruppe wird abhängig vom aufgezeichneten Messwerwert festgelegt:
- ein vordefinierter Stellwert im Bereich 0% bis 100% der Ladeleistung der Lastgruppe;
- eine Ladezeit für die Lastgruppe;
iv) der im Verfahrensschritt iii) festgelegte Stellwert und die festgelegte Ladezeit werden über den Rundsteuersender (RS) lastgruppenspezifisch an die Verbraucher übermittelt, um diese entsprechend mit Energie zu versorgen.

2. Verfahren nach Anspruch 1,
**dadurch gekennzeichnet, dass**
im Verfahrensschritt iii) als vordefinierte Stellwerte die Werte 100%, 80%, 60% und 40% vorgesehen sind.

3. Verfahren nach Anspruch 1 oder 2,
**dadurch gekennzeichnet, dass**
im Verfahrensschritt ii) das feste Zeitraster 15min beträgt.

4. Verfahren nach einem der Ansprüche 1 bis 3,
**dadurch gekennzeichnet, dass**
im Verfahrensschritt iii) für den im Verfahrensschritt i) ermittelten Messwert ein Tagesmittelwert, gesetzt wird.

5. Verfahren nach einem der Ansprüche 1 bis 3,
**dadurch gekennzeichnet, dass**
zusätzlich im Verfahrensschritt iv) ein Sperrkommando an jene Lastgruppen ausgesendet wird, bei denen eine Last oberhalb eines festlegbaren Grenzwertes festgestellt wird, um mit diesem Sperrkommando die Verbraucher abzuschalten.

6. Verfahren nach einem der vorangehenden Ansprüche,
**dadurch gekennzeichnet, dass**
als Sensor ein Temperaturfühler TF1) vorgesehen ist und dass als Messgrösse ein Temperaturwert erfasst wird.

7. Verfahren nach Anspruch 6,
**dadurch gekennzeichnet, dass**
im Verfahrensschritt i) pro Unterstation (LU) zwei Temperaturfühler (TF₁, TF₂) vorgesehen sind, wobei die gemessenen Werte als separate Werte der Unterstation zugeführt werden.

## Claims

1. Method for load control for loads in a supply region, wherein
- the supply region is subdivided into subregions;
- each subregion has an associated substation (LU) with an associated ripple control transmitter (RS);
- each substation (LU) is connected to a sensor (TF₁) and to at least one energy consumption meter (EZ₁) ;
- each load in a load group is associated with a load type, wherein the loads in a load group can be connected or disconnected by the associated ripple control transmitter (RS);
wherein the method comprises the following method steps:
i) measured values are recorded by each substation (LU) over a day by means of the sensor (TF₁) ;
ii) energy consumption values are detected in a fixed time pattern by means of the energy consumption meter (EZ₁) ;
iii) the following are defined for each load group as a function of the recorded measured value:
- a predefined control value in the range from 0% to 100% of the load power of the load group;
- a load time for the load group;
iv) the control value defined in method step iii) and the defined load time are transmitted via the ripple control transmitter (RS) on a load-group-specific basis to the loads, in order to supply them with power as appropriate.

2. Method according to Claim 1,
**characterized in that**
the values 100%, 80%, 60% and 40% are provided as the predefined control values in method step iii).

3. Method according to Claim 1 or 2,
**characterized in that**
the fixed time pattern in method step ii) is 15 minutes.

4. Method according to one of Claims 1 to 3,
**characterized in that**
a daily average value is set in method step iii) for the measured value determined in method step i).

5. Method according to one of Claims 1 to 3,
**characterized in that**
a blocking command is additionally sent in method step iv) to those load groups in which a load is found to be above a threshold which can be defined, in order to disconnect the loads by means of this blocking command.

6. Method according to one of the preceding claims,
**characterized in that**
a temperature sensor (TF1) is provided as the sensor, and **in that** the temperature value is detected as the measurement variable.

7. Method according to Claim 6,
**characterized in that**
two temperature sensors (TF₁, TF₂) are provided for each substation (LU) in method step i), wherein the measured values are supplied as separate values to the substation.

## Revendications

1. Procédé de conduite de la charge de consommateurs dans un domaine d'alimentation, dans lequel
- le domaine d'alimentation est divisé en domaines partiels,
- une sous-station (LU) à laquelle est associée une télécommande centralisée (RS) est associée à chaque domine partiel,
- chaque sous-station (LU) est reliée à un détecteur (TF₁) et à au moins un compteur de consommation d'énergie (EZ₁),
- chaque consommateur d'un groupe de charges est associé à un type de consommateur, les consommateurs d'un groupe de charges pouvant être branchés et débranchés par la télécommande centralisée (RS) associée,
le procédé présentant les étapes de procédé suivantes :
i) chaque sous-station (LU) saisit des valeurs de mesure pendant une journée au moyen du détecteur (TF₁),
ii) les valeurs de consommation d'énergie sont saisies dans une trame temporelle fixe au moyen des compteurs de consommation d'énergie (EZ₁),
iii) pour chaque groupe de charges:
- une valeur de réglage prédéfinie dans la plage de 0 % à 100 % de la capacité de charge du groupe de charges et
- une durée de charge du groupe de charges sont définies en fonction de la valeur de mesure,
iv) la valeur de réglage définie à l'étape de procédé iii) et la durée de charge définie sont transmises aux consommateurs de manière spécifique à chaque groupe de charges par la télécommande centralisée (RS) de telle sorte qu'ils soient alimentés correctement en énergie.

2. Procédé selon la revendication 1, **caractérisé en ce que** dans l'étape iii) de procédé, les valeurs de 100 %, 80 %, 60 % et 40 % sont prévues comme valeurs de réglage prédéfinies.

3. Procédé selon les revendications 1 ou 2, **caractérisé en ce que** la trame temporelle fixe de l'étape ii) du procédé est de 15 min.

4. Procédé selon l'une des revendications 1 à 3, **caractérisé en ce qu'**à l'étape iii) du procédé, une valeur moyenne journalière est fixée pour la valeur de mesure déterminée à l'étape i) du procédé.

5. Procédé selon l'une des revendications 1 à 3, **caractérisé en ce qu'**en supplément, au cours de l'étape iv) du procédé, une commande de blocage est envoyée à chaque groupe de charges sur lequel on constate que la charge est supérieure à une valeur limite définie, de manière à débrancher les consommateurs à l'aide de cette commande de blocage.

6. Procédé selon l'une des revendications précédentes, **caractérisé en ce qu'**une sonde de température (TF1) est prévue comme détecteur et **en ce que** la grandeur de mesure détectée est une valeur de température.

7. Procédé selon la revendication 6, **caractérisé en ce qu'**à l'étape i) de procédé, deux sondes de température (TF₁, TF₂) sont prévues pour chaque sous-station (LU) et **en ce que** les valeurs mesurées sont amenées à la sous-station sous la forme de valeurs séparées.
